# FASCICULE DE BREVET EUROPEEN

(11) **EP 3 110 585 B1**
(45) Date de publication et mention de la délivrance du brevet: **01.04.2020**
(21) Numéro de dépôt: 14766444.5
(22) Date de dépôt: 10.09.2014
(51) Int. Cl.: B23B 7/00, B23B 13/02, B23B 7/02, B23B 3/26

(54) **DECOLLETEUSE AUTOMATIQUE, GROUPE DE COMMANDE POUR DECOLLETEUSE AUTOMATIQUE ET PROCEDE DE RETROFITTAGE AVEC UN TEL GROUPE**
DREHAUTOMATEN, STEUEREINHEIT FÜR DREHAUTOMATEN UND NACHRÜSTUNGSVERFAHREN FÜR EINE DERARTIGE EINHEIT
AUTOMATIC LATHE, CONTROL UNIT FOR AN AUTOMATIC LATHE, AND RETROFITTING METHOD USING SUCH A UNIT

(30) Priorité: 24.02.2014 CH 254142014
(43) Date de publication de la demande: 04.01.2017
(73) Titulaire: Ventura Mecanics SA, 2014 Bôle (CH)
(72) Inventeur: VENTURA, Fabio, CH-2019 Chambrelien (CH); FARINE, Jean-Claude, CH-2300 La Chaux-de-Fonds (CH)
(74) Mandataire: P&TS SA (AG, Ltd.)
(86) Numéro de dépôt international: PCT/EP2014/069316
(87) Numéro de publication internationale: WO 2015/124222

(56) Documents cités:
- EP-A1- 0 278 898
- US-A- 3 811 346
- US-A- 4 831 906

## Description

### Domaine technique

La présente invention concerne un groupe de commande pour décolleteuse automatique selon le préambule de la revendication 1 une décolleteuse automatique munie d'un tel groupe, et un procédé de rétrofittage d'une telle décolleteuse automatique. Un tel groupe est décrit dans la demande WO 2009/000094 A1.

### Etat de la technique

Les tours et décolleteuses automatiques permettent d'usiner des barres cylindriques par tournage et usinage au moyen d'outils tels que des burins par exemple. La position longitudinale de la barre et les déplacements des outils sont traditionnellement commandés par des cames, ou pour les machines plus récentes par des servomoteurs asservis par un module de commande, par exemple une CNC.

Les décolleteuses automatique de type Escomatic D2, D4, D5 et D6 (ensemble : Escomatic DX) constituent une famille de décolleteuses fabriquées depuis plusieurs décennies par la société Esco SA. Les décolleteuses Escomatic D2, D4, D5 ont deux outils de coupe, tandis que les Escomatic D6 ont 3 outils. Ces décolleteuses relativement économiques, très rapides et très précises, se sont vendues dans le monde entier à des milliers exemplaires. La construction générale de ces machines est décrite dans la demande CH-327038 au nom de ESCO SA.

Une des particularités de ces décolleteuses est que la barre usinée ne tourne pas, contrairement aux tours usuels. Au lieu de cela, les outils, par exemple, les burins, sont montés sur un mandrin porte-outil qui tourne autour de la barre de matériau à usiner qui elle ne tourne pas. Il est ainsi possible de charger la machine à partir d'une torche de fil métallique souple ce qui évite les pertes de temps pour la recharge des barres et réduit les chutes de matière. Le fil doit être suffisamment fin pour pouvoir être dressé avant de passer dans le canon de guidage

Le principe d'une telle décolleteuse est illustré dans le brevet français FR1578355. Les décolleteuses Escomatic sont en particulier adaptées au micro-décolletage de pièces de petit diamètre usinées à partir d'un fil suffisamment fin pour être redressé depuis sa position enroulée en torche

La plupart des décolleteuses automatiques Escomatic DX en usage sont des décolleteuses relativement anciennes dont les déplacements sont commandés par des cames. Le déplacement des burins est typiquement commandé par des cames entraînées par une boite à vitesses.

Les utilisateurs de ces décolleteuses manifestent souvent le désir de les remplacer par des machines à commande numériques qui offrent une plus grande souplesse de configuration et sont par exemple mieux adaptées à la fabrication de petites séries. Le remplacement d'une décolleteuse automatique représente cependant un investissement conséquent.

Afin de réduire cet investissement, différentes sociétés proposent donc de « rétrofitter » les décolleteuses automatiques à came, c'est-à-dire de remplacer les systèmes de commande à came par des groupes de commande basés sur un ou des servomoteurs contrôlés par une commande numérique.

Un des problèmes à résoudre pour une telle opération de rétrofittage est d'affecter les moteurs aux différents axes à contrôler. Les décolleteuses automatiques de type Escomatic DX comportent un premier axe pour contrôler la position longitudinale de la barre, et un deuxième axe pour contrôler la position de deux outils d'usinage en plongée.

La demande internationale WO 2009/000094 A1 au nom de Esco SA décrit une machine de décolletage munie de deux actuateurs à commande numérique. Un premier actuateur permet de contrôler l'avance de matière au cours du décolletage. Le deuxième actuateur commande la plongée des outils de décolletage et de coupe. Les deux actuateurs sont disposés côte à côte à l'emplacement habituellement dévolu à la boîte à vitesses dans les machines conventionnelles à cames. Cet arrangement est peu optimal car les deux actuateurs côte à côte occupent un espace relativement important à l'arrière de la machine, qui rend l'accès à cette partie de la machine peu commode. De plus le deuxième actuateur se trouve relativement éloigné du mandrin porte-outil qu'il commande, en sorte que des tiges coulissantes très allongées sont nécessaires pour actionner les outils du mandrin et régler leur position. Ces tiges allongées constituent un organe de commande peu rigide ce qui nuit à la précision du positionnement des outils et à la fiabilité de la machine.

La présente invention a pour objet un tel procédé de rétrofittage adapté aux décolleteuses automatiques de type Escomatic DX, un groupe de commande adapté à ce procédé, et une décolleteuse automatique ainsi rétrofittée et équipé d'un tel groupe de commande.

Un but est de contrôler les différents axes d'une décolleteuse Escomatic DX avec un nombre réduit de servomoteurs afin de réduire les coûts et d'augmenter la fiabilité, sans pour autant sacrifier la vitesse ou la flexibilité d'usinage.

Un autre problème à résoudre est de disposer ces différents servomoteurs sur une décolleteuse Escomatic DX existant. En effet ces décolleteuses automatiques à came n'ont pas été conçues initialement pour être équipées de tels servomoteurs et il est souhaitable de pouvoir les monter avec des modifications minimales, sans toucher au châssis ou aux pièces massives de la décolleteuse, et en limitant l'encombrement total de la machine ainsi équipée. Il est aussi souhaitable de maintenir un accès aisé aux servomoteurs afin de pouvoir assurer leur maintenance aisément et si possible sans démonter de pièces additionnelles.

### Bref résumé de l'invention

Selon l'invention, ces buts sont atteints notamment au moyen d'un groupe de commande pour décolleteuse automatique comportant les caractéristiques de la revendication 1.

L'utilisation d'un seul moteur pour commander la position des deux outils, par exemple de deux burins, permet de réduire le nombre de moteurs nécessaires et donc les coûts du système.

Ce premier servomoteur contribue donc à remplacer la boite à vitesse initialement installée sur les décolleteuses Escomatic D2 par exemple.

La disposition des deux moteurs d'un seul côté de la décolleteuse automatique permet d'une part de réduire l'encombrement de la décolleteuse automatique ainsi équipé. En les plaçant par exemple à l'arrière de la décolleteuse, ils n'interfèrent pas avec le volume dans lequel intervient l'opérateur. En les plaçant par exemple l'un au-dessus de l'autre, on obtient un ensemble compact.

Le montage du premier moteur de commande des outils directement sous le deuxième moteur permet de conserver la longueur des tiges d'origine et de préserver la rigidité et la précision du système

Le premier servomoteur peut être placé au-dessous du second servomoteur.

Les axes des deux servomoteurs peuvent se trouver sensiblement dans le même plan vertical. La distance horizontale entre ces deux axes est de préférence inférieure à 20 centimètres.

L'axe des deux servomoteurs peut être perpendiculaire à l'axe de la machine et de la barre à usiner.

Le deuxième moteur peut être monté dans l'axe d'un disque à friction pour l'avance de la matière.

Le premier servomoteur peut être commandé et connecté à des accessoires pour commander l'avance d'un premier outil lorsqu'il tourne dans un premier sens et pour commander l'avance d'un deuxième outil lorsqu'il tourne en sens opposé.

Les accessoires peuvent comporter un levier commandé par le premier servomoteur tournant dans le premier sens pour commander l'avance du premier outil.

Les accessoires peuvent comporter un centrifuge commandé par le premier servomoteur tournant dans le deuxième sens pour commander l'avance du deuxième outil.

Un premier moyen de rappel peut être prévu pour provoquer le retrait du premier outil lorsque le premier servomoteur tourne dans le deuxième sens.

Un deuxième moyen de rappel peut être prévu pour provoquer le retrait du deuxième outil lorsque le premier servomoteur tourne dans le premier sens.

Cette solution offre l'avantage de fonctionner avec un mandrin conventionnel tel que présent sur les décolleteuses Escomatic DX conventionnelles, et de ne pas nécessiter le remplacement par un mandrin différent.

Le groupe peut en outre comporter un ou plusieurs vérins pour commander la fermeture ou l'ouverture des pinces du mandrin.

Les moteurs peuvent être commandés par une CNC ou de préférence par un automate programmable et/ou un PC, plus rapides.

### Brève description des figures

Des exemples de mise en œuvre de l'invention sont indiqués dans la description illustrée par les figures annexées dans lesquelles :
- La figure 1 illustre une vue d'ensemble en perspective d'une décolleteuse équipée d'un groupe selon l'invention.
- La figure 2 illustre une vue en coupe d'un mandrin rotatif selon l'invention.
- La figure 3 illustre une vue de devant d'un mandrin selon l'invention
- La figure 4 illustre une vue en perspective du dispositif d'avance de la matière, du levier et de la tige de commande des outils.

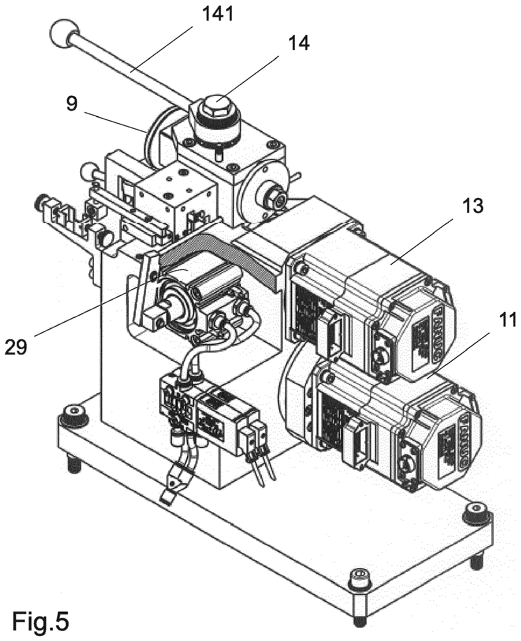

- La figure 5 illustre une vue en perspective de la commande de contre-pince par le vérin.
- La figure 6 illustre une autre vue en perspective d'un groupe de commande selon l'invention.

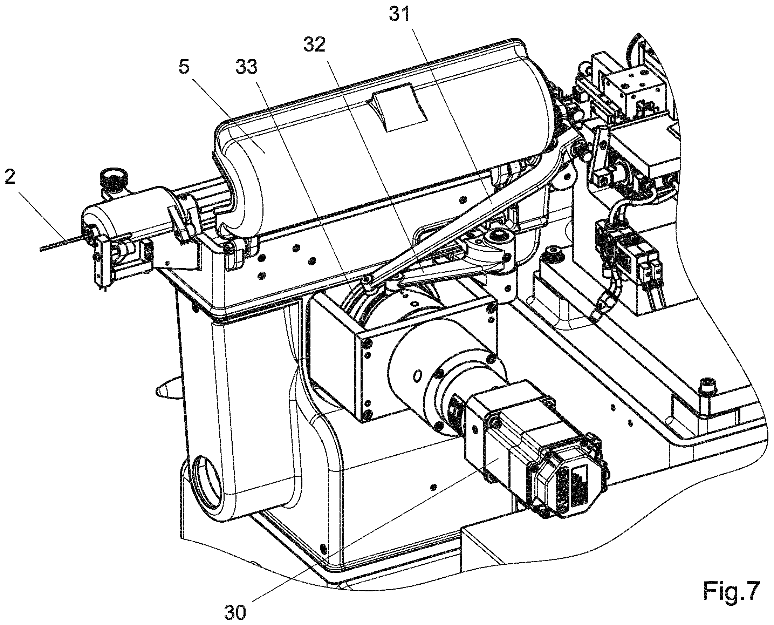

- La figure 7 illustre une autre vue en perspective d'une partie de la décolleteuse modifiée, montrant en particulier le moteur d'actionnement du redresseur.
- La figure 8 illustre une autre vue en perspective éclatée d'un groupe de commande selon l'invention.

### Exemple(s) de mode de réalisation de l'invention

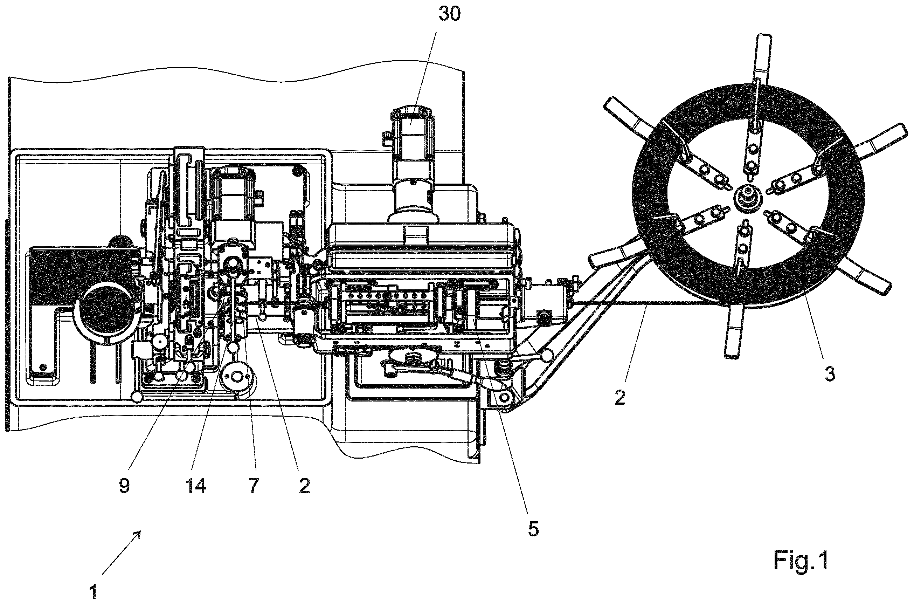

La figure 1 illustre une décolleteuse automatique 1 de type Escomatic D2 équipée d'un groupe selon l'invention. La matière à usiner 2, par exemple un fil métallique, est enroulée sous forme d'une torche dans un dévidoir 3 et redressée par un redresseur 5 conventionnel mais actionné par un servomoteur 30.

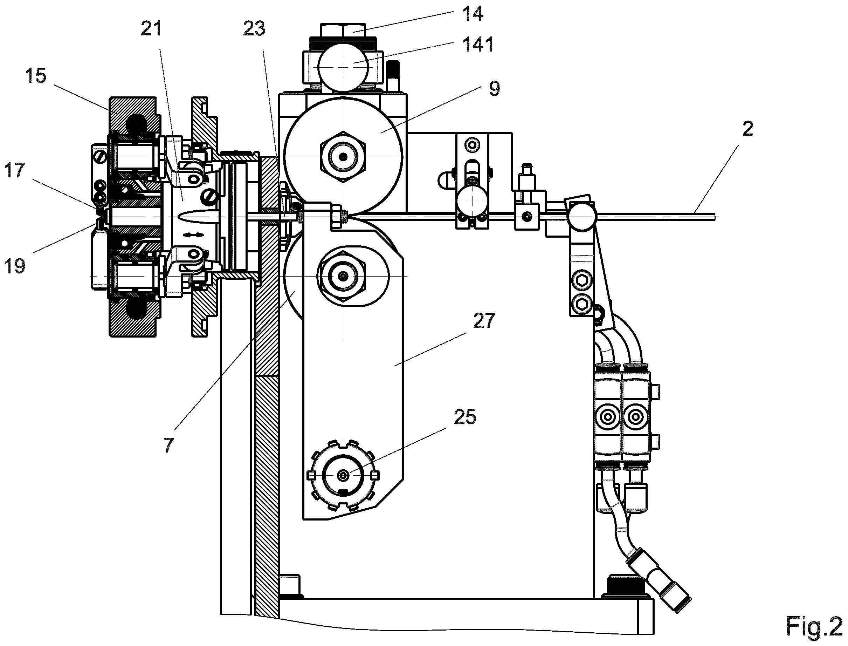

Comme on le voit notamment sur la figure 2, la matière à usiner 2 est entraînée par un dispositif d'avance de la matière comportant un disque à rainure inférieur 7 et un disque à rainure supérieur 9 entre lesquels le fil de matière est entraînée. Le disque inférieur 7 est motorisé au moyen d'un servomoteur 13 (deuxième servomoteur). La pression de serrage entre les deux disques peut être ajustée au moyen de l'écrou 14 actionné par le levier 141.

Le fil de matière 2 passe au travers d'un mandrin rotatif 15 portant dans cet exemple deux burins 17, 19 perpendiculaires à l'axe de la machine. La matière émerge à l'avant du mandrin pour être usinée alternativement par l'un puis par l'autre burin.

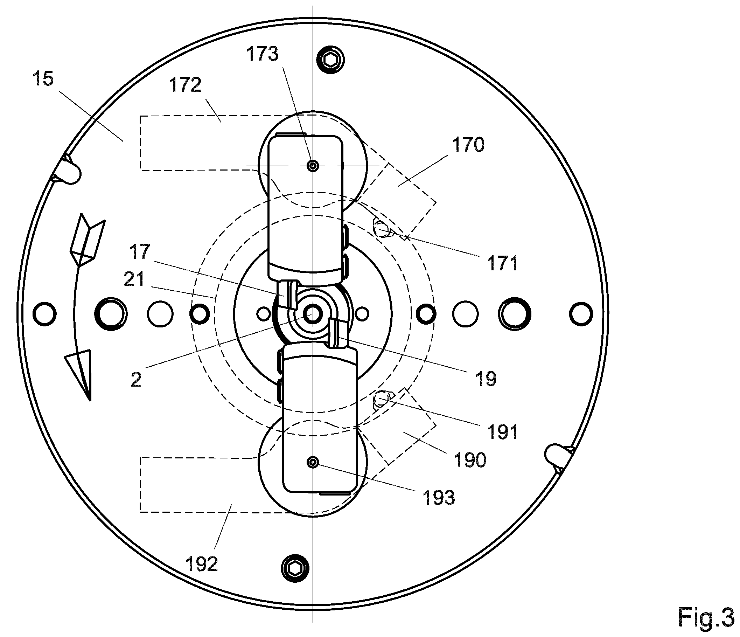

Le mandrin 15 peut être du type illustré dans la demande de brevet EP-A1-0278898. Un mode de réalisation est illustré sur les figures 2 et 3. Il comporte dans cet exemple une douille conique 21 qui peut effectuer des mouvements axiaux en avant ou en arrière afin de commander la position des deux burins 17, 19. Chaque burin 17, 19 est solidaire d'un levier 170, respectivement 190 monté en rotation autour d'un axe 173, respectivement 193. Chaque levier 170, 190 comporte une première extrémité munie d'un contrepoids 172, 192 et une deuxième extrémité munie d'un patin 171, 191 pouvant s'appuyer contre la douille 21.

Lorsque le mandrin tourne à haute vitesse dans un premier sens de rotation, la force centrifuge plaque les patins 171, 191 en permanence contre la douille conique 21. Lorsque la douille conique 21 est poussée dans un sens, elle entraîne le déplacement des burins. Le déplacement du premier burin 17 dépend de la force du levier 27. Le déplacement du second burin 19 dépend de la force centrifuge lorsque le levier 27 recule.

Lorsque la douille conique 21 est poussée par le levier 27, les contrepoids 172, 192 pivotent autour de leurs axes respectifs 173, 193 vers l'intérieur du mandrin, ce qui a pour effet d'abaisser le burin 17 en position d'usinage contre la matière 2, et de relever l'autre burin 19.

Lorsque la douille conique est poussée en sens inverse, les contrepoids 172, 192 pivotent autour de leurs axes respectifs 173, 193 vers l'extérieur du mandrin, ce qui a pour effet d'abaisser le burin 19, en position d'usinage contre la matière 2, et de relever l'autre burin 17

Ainsi, selon le sens de rotation de l'axe 25 tel que défini par le premier servomoteur 11, lorsque l'un des burins se dirige contre le centre de la pièce à décolleter, l'autre s'en éloigne. La profondeur de pénétration du burin en position d'usinage est déterminée par la position d'appui du patin 171, 191 correspondant et donc par la position longitudinale de la douille conique 21. Cette position longitudinale est commandée par la tige axiale de commande 23.

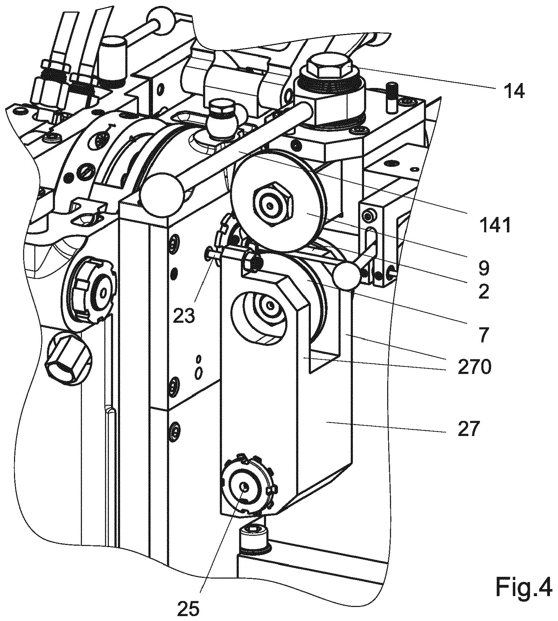

Un premier servomoteur 11 commande la position angulaire de l'axe transversal 25 traversant latéralement la décolleteuse. Un levier 27 est monté à l'extrémité distale de cet axe transversal, comme illustré par exemple sur la figure 4. Ce levier 27 pivote dans un plan vertical parallèle à l'axe de la machine et au fil 2 lorsque le premier servomoteur 11 est actionné. Il convertit ainsi la rotation de l'axe 25 à la sortie du réducteur en une quasi-translation appliquée à la tige axiale de commande 23 qui est montée à l'extrémité du levier 27. Le levier 27 agit donc comme une bielle afin de commander la position axiale de la tige 23 (et 23') selon son axe perpendiculaire à l'axe du premier servomoteur 11 et au-dessus de l'axe du premier servomoteur 11.

Dans un mode de réalisation préférentiel, comme on le voit notamment sur la figure 2, le groupe de commande comporte deux tiges axiales de commande 23, 23' actionnés par le même levier 27 dont l'extrémité 270 est conformée en fourche. Le disque inférieur 7 d'avance de la matière et, de préférence, une portion du disque supérieur 9 d'avance de la matière est inséré dans l'interstice entre les deux bras de cette fourche 270.

Le déplacement axial des tiges 23, 23' est transmis à la douille conique 21 qui détermine ainsi la position radiale du patin 171, 191 du levier 17 ou 19 en appui contre cette douille conique, et donc la distance entre le burin 17 ou 19 correspondant et le centre de la pièce usinée.

Des détecteurs de fin de course non représentés sont avantageusement prévus pour bloquer la rotation du levier 27 autour de l'axe 25 dès que cette rotation sort d'une plage prévue. Ces détecteurs de fin de course peuvent aussi être employés pour réinitialiser les deux positions extrêmes de la course du levier, par exemple au cas ou la position imposée par l'automate de commande ne correspond plus à la position appliquée par le servomoteur 11.

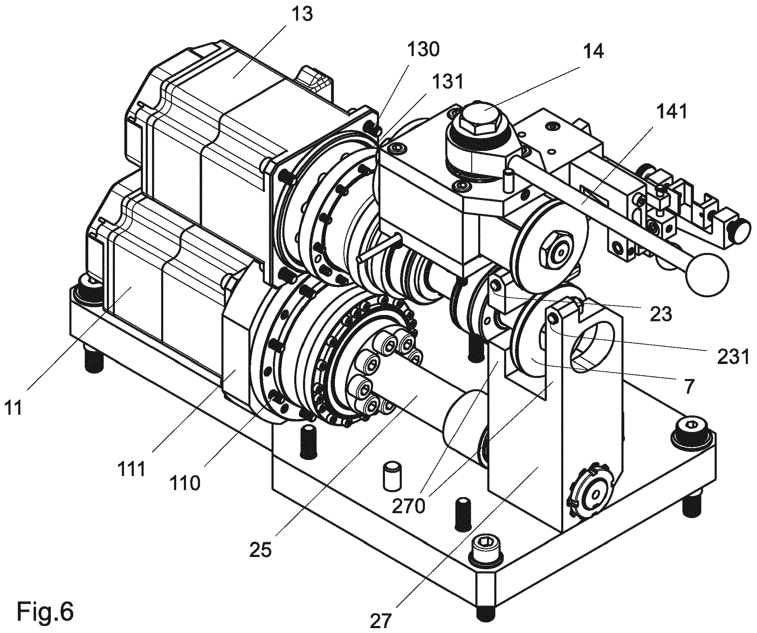

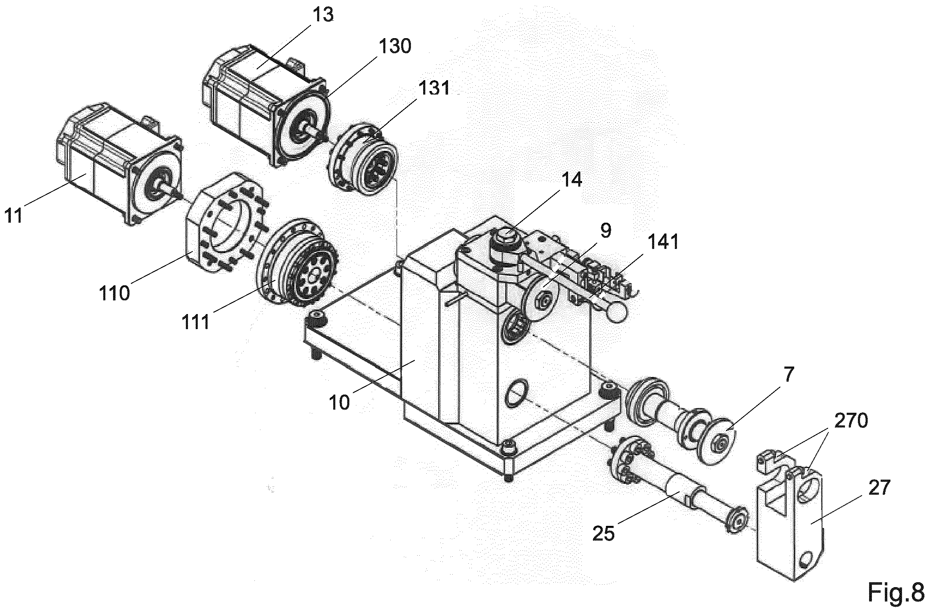

Le premier servomoteur 11 et le deuxième servomoteur 13 sont montés sur le côté de la décolleteuse, à l'emplacement habituellement dévolu à la boîte à vitesse des décolleteuses Escomatic conventionnelles. Ce montage est illustré notamment sur les figures 6 et 8. Des éléments de montage 10 et 110 sont prévus à cet effet. Dans l'exemple illustré, le premier servomoteur 11 est monté au moyen d'une flasque 110 de support horizontale vissée sur un bloc 10 contre le flanc de à la décolleteuse. Le deuxième servomoteur 13 est monté par les vis 130 directement sur le bloc 10.

Afin de rapprocher au maximum les deux servomoteurs 11, 13 l'un au-dessus de l'autre, au moins un des servomoteurs, par exemple le servomoteur 13, comporte un réducteur 131 directement dans le châssis de la machine. Dans l'exemple illustré, la le réducteur de l'autre servomoteur est constituée par un un réducteur en cartouche discret 111. Il est aussi possible de monter les deux réducteurs 111, 131 dans le châssis de la machine. Le réducteur peut être par exemple de type harmonic drive

De manière avantageuse, le groupe de commande comporte en outre un vérin 29 pour commander l'ouverture et la fermeture d'une contre-pince de maintien non représentées afin de maintenir la barre de matière 2 en aval de la position d'usinage, notamment pendant l'opération de tronçonnage.

Le servomoteur 30 permet de commander le redressage de la matière, en agissant au moyen d'une came 33 sur la position des leviers 31 et 32 commandant le redresseur 5 qui peut être conventionnel. Le levier 31 permet de bloquer la matière pendant le redressage tandis que le levier 32 permet de déplacer le chariot de redressage. Les deux leviers sont commandés par la came 33 qui est indépendante du cycle de production ; elle ne fonctionne de préférence que pendant les temps morts. Ce servomoteur remplace l'entraînement par la chaîne du redresseur comportant une boîte à vitesse dans les machines Escomatic DX conventionnelles.. L'action de redressage est de préférence synchronisée avec l'opération de tronçonnage qui se fait en temps mort (lorsque la matière n'avance pas) ; ces deux actions sont ainsi liées l'une à l'autre au travers de la commande numérique.

Les déplacements et la position angulaire des deux servomoteurs 11, 13, ainsi que l'action du vérin 29, sont de préférence commandés par un automate programmable, qui offre l'avantage d'une très grande vitesse de traitement. Pour l'avance de matière, cet automate peut implémenter une came numérique conventionnelle. Pour la commande des burins, cet automate peut mettre en œuvre une came quintique remplaçant les cames conventionnelles montées sur la boîte à vitesses.

L'invention concerne également une décolleteuse automatique de type Escomatic, comportant un groupe de commande tel que décrit, ainsi qu'un procédé de rétrofittage de décolleteuse automatique de type Escomatic, comportant les opérations suivantes :
remplacement de la boite à vitesse et des systèmes de cames commandant l'avancée de barre et le déplacement des outils par un groupe de commande tel que décrit.

La machine décrite ci-dessus présente l'avantage de permettre l'usinage par interpolation entre la position d'avance de la matière, déterminée par le servomoteur 13, et la position des outils 17, 19 déterminée par le servomoteur 11. Un algorithme d'interpolation approprié est décrit par exemple dans « Time-Optimal Interpolation for CNC Machining along Curved Tool Pathes with Confined Chord Error », Chun-Ming Yuan et al., in Mathematics Mechanization Research Preprints, KLMM, Chinese Academy of Sciences, Vol. 30, 57-89, May 16, 2011.

### Numéros de référence employés sur les figures

- 1: Décolleteuse automatique
- 2: Matière à usiner
- 3: Dévidoir
- 5: Moyens de dressage
- 7: Disque inférieur d'avance de la matière
- 9: Disque supérieur d'avance de la matière
- 10: Bloc
- 11: Premier servomoteur pour la commande des outils
- 110: Elément de montage du premier servomoteur (par exemple flasque d'accouplement)
- 111: Réducteur en cartouche du deuxième servomoteur
- 13: Deuxième servomoteur pour l'avance de la matière
- 130: Elément de montage du deuxième servomoteur (vis)
- 131: Réducteur en éléments séparés du deuxième servomoteur
- 14: Ecrou de réglage de de la pression entre les disques
- 141: Levier actionnant l'écrou 14
- 15: Mandrin porte-outils
- 17: Premier burin
- 170: Premier levier
- 171: Patin du premier levier
- 172: Contrepoids du premier levier
- 173: Axe de rotation du premier levier
- 19: Deuxième burin
- 190: Deuxième levier
- 191: Patin du deuxième levier
- 192: Contrepoids du deuxième levier
- 193: Axe de rotation du deuxième levier
- 21: Douille conique
- 23, 23': Tiges axiales de commande de la position desdits outils
- 25: Axe (barre/tige) transversal pour la commande des burins
- 27: Levier pivotant dans un plan vertical
- 270: Extrémité du levier conformée en fourche
- 29: Vérin
- 30: Troisième servomoteur pour la commande du redressage
- 31: Levier de blocage de la matière pendant le redressage
- 32: Levier de déplacement du charriot de redressage
- 33: Came de commande des leviers 31 et 32

## Revendications

1. Groupe de commande pour décolleteuse automatique (1), comportant :
un premier servomoteur (11) pour commander la position des outils (17, 19) de la décolleteuse;
un deuxième servomoteur (13) pour commander l'avance d'une barre de matière ;
un axe transversal (25) destiné à traverser latéralement ladite décolleteuse pour transmettre les mouvements du premier servomoteur (11) ;
un levier (27) monté à une extrémité dudit axe (25) opposée aux dits servomoteurs (11, 13) et agencé pour être mis en rotation dans un plan vertical par ledit axe transversal (25), de manière à commander le déplacement horizontal d'au moins une tige axiale de commande (23, 23') de la position desdits outils (17, 19),
le groupe étant **caractérisé par** des éléments de montage (10, 110, 130) pour monter les deux dits servomoteurs l'un au dessous de l'autre du même côté de la décolleteuse.

2. Groupe de commande selon la revendication 1, comportant en outre un vérin (29) pour commander l'ouverture et la fermeture d'une contre-pince de maintien de ladite barre de matière (2) pendant l'opération de tronçonnage.

3. Groupe de commande selon l'une des revendications 1 à 2, comportant un automate et/ou un ordinateur pour contrôler en tout temps la position angulaire des deux moteurs.

4. Décolleteuse automatique, comportant un groupe de commande selon l'une des revendications précédentes.

5. Décolleteuse selon la revendication 4, comportant en outre :
un mandrin sur lequel sont montés lesdits outils (17, 19) ;
une douille conique (21),
ladite tige axiale de commande (23, 23') étant agencée pour déterminer la position axiale de la douille conique (21), la douille conique (21) étant agencée pour déterminer la position radiale d'un outil (17) lorsque ledit axe transversal (25) tourne dans un sens et d'un autre outil (19) lorsque ledit axe transversal (25) tourne dans l'autre sens.

6. Décolleteuse selon la revendication 5, chaque outil (17, 19) étant lié à un levier (170, 190) muni d'un contrepoids (172, 192) agencé pour contrôler l'appui du levier contre la douille conique (21) grâce à la force centrifuge.

7. Décolleteuse selon l'une des revendications 5 à 6, comportant en outre un troisième servomoteur (30) pour commander un dispositif (5) de redressage et de blocage pendant le tronçonnage.

8. Décolleteuse selon la revendication 7, ledit dispositif de redressage et de tronçonnage (5) comportant une came (32) commandée par ledit troisième servomoteur (30) pour commander lesdites opérations de redressage et de blocage pendant le tronçonnage.

9. Décolleteuse selon l'une des revendications 7 ou 8, les mouvements du troisième servomoteur étant non solidaires de ceux des premiers et deuxièmes servomoteurs (11, 13).

10. Décolleteuse selon l'une des revendications 4 à 9, comprenant un bloc (10) lié à un bâti de la décolleteuse, au moins des desdits premiers ou deuxièmes servomoteurs (11, 13) étant associé à un réducteur logé directement dans ledit bâti.

11. Décolleteuse selon l'une des revendications 4 à 10, comprenant en outre au moins un détecteur de fin de course pour détecter la fin de course dudit levier (27).

12. Procédé de rétrofittage de décolleteuse automatique comportant les opérations suivantes :
remplacement de la boite à vitesses et des systèmes de cames par un groupe de commande selon l'une des revendications 1 à 3.

13. Procédé selon la revendication 12, comportant en outre une étape de remplacement de la chaîne commandant le redressage de la barre de matière par un groupe de commande commandé par un troisième servomoteur (30).

## Patentansprüche

1. Steuereinheit für einen Drehautomaten (1), umfassend:
einen ersten Servomotor (11) zum Steuern der Position der Werkzeuge (17, 19) der Drehbank;
einen zweiten Servomotor (13) zum Steuern des Vorschubs einer Materialstange;
eine Querachse (25), die dazu bestimmt ist, die Drehbank seitlich zu durchkreuzen, um die Bewegungen des ersten Servomotors (11) zu übertragen;
einen Hebel (27), der an einem Ende der Querachse (25) gegenüber den Servomotoren (11, 13) montiert und so angeordnet ist, dass er in einer vertikalen Ebene durch die Querachse (25) gedreht werden kann, um die horizontale Verschiebung mindestens einer axialen Steuerstange (23, 23') aus der Position der Werkzeuge (17, 19) zu steuern;
die Steuereinheit **gekennzeichnet durch** die Befestigungselemente (10, 110, 130) zur Befestigung der beiden genannten Servomotoren übereinander auf der gleichen Seite der Stangendrehmaschine.

2. Steuereinheit nach Anspruch 1, ferner umfassend einen Stellvorrichtung (29) zum Steuern des Öffnens und Schließens einer Gegenklammer zum Halten der Materialstange (2) während des Schneidvorgangs.

3. Steuereinheit nach einem der Ansprüche 1 bis 2, umfassend einen Automaten und/oder einen Computer zum Steuern der Winkellage beider Motoren zu jeder Zeit.

4. Drehautomat, umfassend eine Steuereinheit nach einem der vorhergehenden Ansprüche.

5. Drehautomat nach Anspruch 4, ferner umfassend:
einen Dorn, auf dem die Werkzeuge (17, 19) montiert sind;
ein konischer Schaft (21),
die axiale Steuerstange (23, 23') angeordnet, um die axiale Position des konischen Schafts (21) zu bestimmen, wobei der konische Schaft (21) angeordnet ist, um die radiale Position eines Werkzeugs (17) zu bestimmen, wenn die Querachse (25) in eine Richtung dreht, und die eines anderen Werkzeugs (19), wenn die Querachse (25) in die andere Richtung dreht.

6. Drehautomat nach Anspruch 5, wobei jedes Werkzeug (17, 19) mit einem Hebel (170, 190) verbunden ist, der mit einem Gegengewicht (172, 192) versehen ist, das angeordnet ist, um die Abstützung des Hebels gegen den konischen Schaft (21) durch Zentrifugalkraft zu steuern.

7. Drehautomat nach einem der Ansprüche 5 bis 6, ferner umfassend einen dritten Servomotor (30) zum Steuern einer Richt- und Verriegelungsvorrichtung (5) während des Schneidens.

8. Drehautomat nach Anspruch 7, wobei die Richt- und Verriegelungsvorrichtung (5) eine Nocke (32) umfasst, die von dem dritten Servomotor (30) gesteuert wird, um die Richt- und Verriegelungsvorgänge während des Schneidens zu steuern.

9. Drehautomat nach einem der Ansprüche 7 oder 8, wobei die Bewegungen des dritten Servomotors nicht mit denen des ersten und zweiten Servomotors (11, 13) gekoppelt sind.

10. Drehautomat nach einem der Ansprüche 4 bis 9, umfassend einen Block (10), der mit einem Rahmen der Gewindeschneidmaschine verbunden ist, wobei mindestens der erste oder zweite Servomotor (11, 13) einem Getriebe zugeordnet ist, das direkt in dem Rahmen untergebracht ist.

11. Drehautomat nach einem der Ansprüche 4 bis 10, ferner umfassend mindestens einen Endsensor zum Erfassen der Endpositionen des Hebels (27).

12. Nachrüstverfahren für einen Drehautomaten, umfassend die folgenden Schritte:
Austausch der Getriebe- und Nockensysteme durch eine Steuereinheit nach einem der Ansprüche 1 bis 3.

13. Verfahren nach Anspruch 12, ferner umfassend einen Schritt zum Ersetzen der Befehlskette, die das Richten der Materialstange steuert, durch eine Steuereinheit, die von einem dritten Servomotor (30) gesteuert wird.

## Claims

1. Control unit for automatic turning machine (1), comprising:
a first servomotor (11) to control the position of the tools (17, 19) of the turning machine;
a second servomotor (13) to control the advance of a material bar;
a transverse axis (25) intended to laterally cross said turning machine to transmit the movements of the first servomotor (11);
a lever (27) mounted at one extremity of said axis (25) opposite to said servomotors (11, 13) and arranged to be set in rotation in a vertical plane by said transverse axis (25), so as to control the horizontal movement of at least one axial control rod (23, 23') of the position of said tools (17, 19),
the group being **characterised by** mounting elements (10,110,130) for mounting the two said servomotors one below the other on the same side of the turning machine.

2. Control unit according to claim 1, comprising furthermore an actuator (29) to control the opening and closing of a counter clamp holding said material bar (2) during the cutting operation.

3. Control unit according to one of the claims 1 to 2, comprising an automaton and/or a computer to control at all times the angular position of the two motors.

4. Automatic turning machine, comprising a control unit according to one of the previous claims.

5. Turning machine according to claim 4, comprising furthermore:
a mandrel on which are mounted said tools (17, 19);
a conical sleeve (21),
said axial control rod (23, 23') being arranged to determine the axial position of the conical sleeve (21), the conical sleeve (21) being arranged to determine the radial position of a tool (17) when said transverse axis (25) turns in one direction and of another tool (19) when said transverse axis (25) turns in the other direction.

6. Turning machine according to claim 5, each tool (17, 19) being linked to a lever (170, 190) provided with a counterweight (172, 192) arranged to control the support of the lever against the conical sleeve (21) through the centrifugal force.

7. Turning machine according to one of the claims 5 to 6, comprising furthermore a third servomotor (30) to control a straightening and blocking device (5) during the cutting.

8. Turning machine according to claim 7, said straightening and blocking device (5) comprising a cam (32) controlled by said third servomotor (30) for controlling said straightening and blocking operations during the cutting.

9. Turning machine according to one of the claims 7 or 8, the movements of the third servomotor being separate from that of the first and second servomotors (11, 13).

10. Turning machine according to one of the claims 4 to 9, comprising a block (10) linked to a frame of the turning machine, of at least the first or second servomotors (11, 13) being linked to a reducer housed directly in said frame.

11. Turning machine according to one of the claims 4 to 10, comprising furthermore at least one end position feedback for detecting the end position of said lever (27).

12. Retrofitting method of automatic cutting machine comprising the following operations:
replace the gear box and the cam systems by a control unit according to one of the claims 1 to 3.

13. Method according to claim 12, comprising furthermore a step of replacement of the chain controlling the straightening of the material bar by a control unit controlled by a third servomotor (30).
